# EUROPÄISCHE PATENTSCHRIFT

(11) **EP 3 346 183 B1**
(45) Veröffentlichungstag und Bekanntmachung des Hinweises auf die Patenterteilung: **22.04.2020**
(21) Anmeldenummer: 17198196.2
(22) Anmeldetag: 25.10.2017
(51) Int. Cl.: F21V 21/35, H01R 25/14, H02G 5/04

(54) **STROMSCHIENENSYSTEM**
BUSBAR SYSTEM
SYSTÈME À RAIL CONDUCTEUR

(30) Priorität: 25.10.2016 DE 202016105990 U
(43) Veröffentlichungstag der Anmeldung: 11.07.2018
(73) Patentinhaber: Zumtobel Lighting GmbH, 6850 Dornbirn (AT)
(72) Erfinder: Ladstätter, Gerald, 6833 Klaus (AT)
(74) Vertreter: Thun, Clemens

(56) Entgegenhaltungen:
- WO-A1-2007/064195
- DE-A1- 4 217 494
- DE-U1- 8 908 897
- FR-A5- 2 152 153
- US-A- 2 617 848
- US-A- 2 696 533

## Beschreibung

Die vorliegende Erfindung betrifft ein Stromschienensystem, welches eine längliche Trägeranordnung sowie ein sich entlang der Trägeranordnung erstreckendes Leitungshalterungs-System aufweist, das Leitungen für eine Stromversorgung und/oder eine Signalübertragung derart hält, dass diese Leitungen durch an das Stromschienensystem anzuschließende Einheiten kontaktierbar sind.

Stromschienensysteme der oben beschriebenen Art kommen beispielsweise zu Beleuchtungszwecken zum Einsatz. Ein wesentlicher Vorteil derartiger Systeme besteht dabei darin, dass diese eine sehr flexible Anordnung beziehungsweise Positionierung von Leuchten oder anderen Komponenten des Beleuchtungssystems ermöglichen, sodass die letztendlich erzielbare Beleuchtung einfach und flexibel an entsprechende Einsatzgebiete angepasst werden kann. Dies bedeutet insbesondere, dass auch noch nach Installation des Systems durch einen Verbraucher in einfacher Weise eine Neupositionierung oder ein Wechsel der Leuchten oder anderer Einheiten vorgenommen werden kann, ohne dass derartige Arbeiten durch ein Fachpersonal durchgeführt werden müssten.

Stromschienensysteme der oben beschriebenen Art sind in unterschiedlichen Varianten aus dem Stand der Technik bekannt. Eine typische Eigenschaft dieser Systeme besteht dabei darin, dass die Leitungen für die Stromversorgung und/oder Signalübertragung nicht nur an wenigen bestimmten Stellen durch dort vorgesehene spezielle Kontaktierungseinheiten zugänglich sind sondern idealerweise über die gesamte Länge des Systems, zumindest jedoch über größere Abschnitte hinweg frei kontaktierbar sind. Das heißt, die Leitungen sind nicht durch eine entsprechende isolierende Ummantelung geschützt sondern werden derart gehalten, dass die Kontakte der anzuschließenden Verbraucher sie an einer beliebig frei gewählten Stelle berühren können. Hierzu dient das bereits erwähnte Leitungshalterungs-System, das aus einem oder mehreren länglichen Elementen aus einem isolierenden Material besteht, wobei hierbei die Leitungen üblicherweise in Längsnuten oder Kanälen aufgenommen sind, die zu einer Kontaktierungsseite hin offen sind. Die Leitungen, an denen die normale Netzversorgungsspannung oder aber auch gegebenenfalls eine entsprechende Niedervoltversorgungsspannung anliegen kann, können dann also von einer bestimmten Seite her durch die Kontakte der Verbraucher berührt werden.

US 2 696 533 zeigt ein Stromschienensystem bestehend aus im Wesentlichen drei voneinander isolierten Stromschienen, einen die Stromschienen führenden isolierten Träger und einen am Träger verschiebbar montierten und mit den über Schleifkontakte kontaktierten Schlitten. Strom fließt über die des Schlittens auf die Stromschienen und kann dort über sich im Träger befindliche mit den Stromschienen verbundene Steckdosen abgegriffen werden. Dazu sind im Träger seitliche und auf der Oberseite befindliche Aussparrungen vorgesehen, die mit Steckdosen bestückt werden können.

DE 42 17 494 A1 beschreibt eine Stromschiene, die im Wesentlichen aus einem elektrisch leitenden Stromschienenkörper (zum Beispiel ein Alurohr) und einem darauf spiralförmig aufgewickelten leitenden Band besteht. Um einen Kurzschluss zu vermeiden ist das leitende Band derart ausgebildet, sodass es isolierend gegenüber dem Stromschienenkörper und zugleich leitend gegenüber einer Anschlussvorrichtung wirkt, die mithilfe zweier nichtleidender elastischer Klemmen den Stromschienenkörper umgreift. Über zwei federnd gelagerte Stromabnehmer an der Unterseite der Anschlussvorrichtung fließt der Strom zu einem Verbraucher.

DE 89 08 897 U1 beschreibt eine Stromübertragungseinheit, die aus zumindest einem Stromleiter und zumindest einem Stromabnehmer besteht. Der Stromleiter wiederum weist einen aus biegsamem Isoliermaterial bestehenden, strangförmigen Träger und mindestens zwei aus biegsamem, elektrisch leitendem Material bestehende Leiterbahnen auf, die getrennt voneinander an der Außenseite des Trägers freiliegend verlaufen.

FR 2 152 153 A5 und WO 2007/064195 A1 beschreiben Stromschienenkonzepte, die unterschiedliche von außen kontaktierbare Leiter innerhalb eines starren Profils führen. Üblicherweise weist das Leitungshalterungs-System selbst keine ausreichende Stabilität auf. Es ist deshalb in der Regel an oder innerhalb einer länglichen Trägeranordnung aufgenommen, wobei hierfür beispielsweise entsprechend stabile, aus Metall oder Blech bestehende Trägerelemente genutzt werden, die in etwa U-förmig ausgebildet sind, sodass sie einen länglichen, so zu einer Seite hin offenen Aufnahmeraum bilden. Innerhalb dieses Aufnahmeraums ist dann das Leitungshalterungs-System mit den Leitungen derart angeordnet, dass von der offenen Seite der Trägeranordnung her angesetzte Verbraucher die Leitungen kontaktieren können.

Da es sich bei den oben beschriebenen Stromschienensystemen in der Regel um längliche Systeme handelt, die in größeren Räumen wie z.B. Werkshallen oder Gängen genutzt werden, muss auch das Leitungshalterungs-System eine entsprechende Länge aufweisen. Es hat sich hierbei als vorteilhaft herausgestellt, wenn die entsprechenden Komponenten des Leitungshalterungs-System im sog. Extrusionsverfahren hergestellt werden. Unabhängig vom Herstellungsverfahren allerdings sind bislang überwiegend Leitungshalterungs-Systeme im Einsatz, welche einen über die gesamte Länge des Systems hinweg stets gleichbleibenden Querschnitt aufweisen. Dies wiederum bedeutet, dass ein Anschließen der Verbraucher des Systems an das Stromschienensystem nur aus einer bestimmten Richtung möglich ist, was allerdings die Möglichkeit zur Anordnung entsprechender Komponenten eines Beleuchtungssystems an der Trägeranordnung entsprechend einschränkt. Ist beispielsweise das Stromschienensystem horizontal montiert, so können die entsprechenden Beleuchtungseinheiten in der Regel lediglich an der Unterseite des Stromschienensystems angeordnet werden. Eine seitliche Anordnung oder gar eine Anordnung oberhalb des Stromschienensystems um beispielsweise eine indirekte Beleuchtung zu erzielen, ist nicht möglich beziehungsweise kann nur mit hohem Zusatzaufwand erzielt werden.

Der vorliegenden Erfindung liegt deshalb die Aufgabenstellung zugrunde, bekannte Stromschienensysteme derart weiterzuentwickeln, dass eine flexiblere Positionierung beziehungsweise Anordnung von Verbrauchern an dem Stromschienensystem ermöglicht wird.

Die Aufgabe wird durch ein Stromschienensystem, welches die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf dem Gedanken, das Leitungshalterungs-System derart auszugestalten, dass ein Kontaktieren der Leitungen aus unterschiedlichen Richtungen möglich ist. Während wie eingangs erwähnt bislang derartige Leitungshalterungs-Systeme einen über die gesamte Länge hinweg unveränderten Querschnitt aufwiesen, ist nunmehr erfindungsgemäß vorgesehen, dass das Leitungshalterungs-System zumindest zwei unterschiedliche Querschnitts-Konfigurationen aufweist, welche das Kontaktieren der Leitungen aus jeweils unterschiedlichen Richtungen ermöglichen.

Gemäß der vorliegenden Erfindung wird also ein Stromschienensystem mit einer länglichen Trägeranordnung sowie einem sich entlang der Trägeranordnung erstreckenden Leitungshalterungs-System vorgeschlagen, wobei das Leitungshalterungs-System Leitungen, die als Kabel ausgebildet sind, für eine Stromversorgung und/oder Signalübertragung derart hält, dass die Leitungen durch an das Stromschienensystem anzuschließende Einheiten kontaktierbar sind, und wobei erfindungsgemäß das Leitungshalterungs-System zumindest zwei unterschiedliche Querschnitts-Konfigurationen aufweist, welche das Kontaktieren der Leitungen aus unterschiedlichen Richtungen ermöglichen. Die zum Einsatz kommenden unterschiedlichen Querschnitts-Konfigurationen können nunmehr also derart ausgeführt sein, dass sie sowohl das Anschließen von Einheiten von der Unterseite her als auch ergänzend hierzu beispielsweise von der Oberseite her ermöglichen. Auch eine seitliche Kontaktierungsmöglichkeit kann hierdurch gegebenenfalls geschaffen werden, sodass letztendlich deutlich flexibler und vielseitiger Einheiten an einem Stromschienensystem positioniert werden können.

Dabei ist vorzugsweise vorgesehen, dass die unterschiedlichen Querschnitts-Konfigurationen alternierend entlang des Leitungshalterungs-Systems ausgebildet sind. Das heißt, an in Längsrichtung hintereinander befindlichen Bereichen können die Verbraucher abwechselnd aus unterschiedlichen Richtungen her die Leitungen kontaktieren. Ferner ist vorgesehen, dass zwei aufeinanderfolgende unterschiedliche Querschnitts-Konfigurationen über eine dritte Konfiguration, nämlich einen sogenannten Stabilisierungsbereich miteinander verbunden werden, dessen Querschnitt derart gewählt ist, dass die Leitungen in diesem Bereich im Wesentlichen über ihren gesamten Umfang hinweg abgestützt sind. Das heißt, in diesem Stabilisierungsbereich werden die Leitungen besonders stabil gelagert und abgestützt, sodass sie trotz der verschiedenen Querschnitts-Konfigurationen, die über die gesamte Länge hinweg zur Verfügung gestellt werden, sicher und zuverlässig von dem Leitungshalterungs-System gelagert werden.

Das erfindungsgemäße Leitungshalterungs-System kann dabei vorzugsweise durch mehrere in Längsrichtung hintereinander angeordnete längliche Profilteile gebildet sein, wobei insbesondere vorgesehen sein kann, dass die Profilteile jeweils identisch ausgeführt sind. Dies bedeutet, dass einzelne Profilteile die mehreren unterschiedlichen Querschnitts-Konfigurationen beinhalten, was beispielsweise dadurch realisiert werden kann, dass die Profilteile durch im Spritzgussverfahren hergestellte Kunststoffteile gebildet sind und diese derart ausgeführt sind, dass sie in einem ursprünglichen Zustand eine eher flache Konfiguration aufweisen und dann durch Falten um ein oder mehrere in Längsrichtung verlaufende Achsen zu dem endgültigen Profilteil geformt werden. Wie nachfolgend anhand der Figuren noch näher beschrieben wird, kann auf diesem Weg in einer sehr eleganten Art und Weise ein Element zur Leitungshalterung gebildet werden, welches erfindungsgemäß abschnittsweise das Kontaktieren der Leitungen aus unterschiedlichen Richtungen her ermöglicht.

Die Trägeranordnung ist vorzugsweise derart ausgeführt, dass sie einen sich in Längsrichtung erstreckenden Aufnahmeraum bildet, in dem das Leitungshalterungs-System aufgenommen ist. Zumindest in denjenigen Bereichen, in denen das Leitungshalterungs-System ein Kontaktieren der Leitungen aus einer bestimmten Richtung her ermöglicht, ist dann eine entsprechende Zugangsöffnung in der Trägeranordnung vorgesehen. Vorzugsweise kann jedoch vorgesehen sein, dass der Aufnahmeraum zu einer Seite hin über die gesamte Länge der Trägeranordnung hinweg offen ist, zusätzlich jedoch in bestimmten Bereichen zu weiteren Seiten derart offen ist beziehungsweise zumindest geöffnet werden kann, dass aus diesen Richtungen her die Leitungen dann kontaktiert werden können.

Nachfolgend soll die Erfindung anhand der beiliegenden Zeichnung näher erläutert werden. Es zeigen:
- Figur 1: schematisch ein Stromschienensystem gemäß der vorliegenden Erfindung, welches das Kontaktieren der Leitungen aus unterschiedlichen Richtungen ermöglicht;
- Figuren 2a und 2b: verschiedene Möglichkeiten zur Positionierung von Leitungen innerhalb des Stromschienensystems;
- Figuren 3a, 3b und 3c: unterschiedliche Querschnitts-Konfigurationen, die durch das erfindungsgemäße Leitungshalterungs-System realisiert werden; und
- Figuren 4 und 5: Ansichten eines zum Realisieren des erfindungsgemäßen Leitungshalterungs-Systems genutzten Profilteils.

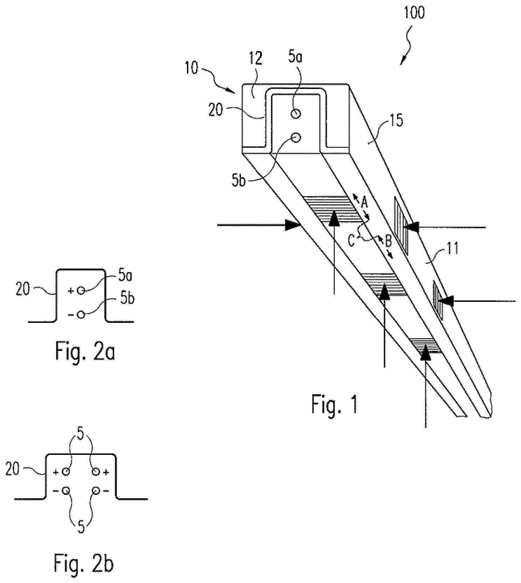

Anhand der schematischen Darstellung von Figur 1 soll zunächst der Grundgedanke des erfindungsgemäßen Konzepts näher erläutert werden.

Dargestellt ist in Figur 1 ein Stromschienensystem, welches allgemein mit dem Bezugszeichen 100 versehen ist und beispielsweise zur Realisierung eines sogenannten Lichtbandes genutzt werden kann. In diesem Fall sollen also insbesondere Beleuchtungseinheiten an dem Stromschienensystem 100 angeordnet werden, wobei insbesondere auch eine lückenlose Anordnung in Längsrichtung hintereinander denkbar wäre, um eine kontinuierliche Lichtabgabe über eine größere Länge hinweg erzielen zu können. Darüber hinaus kann allerdings auch die zusätzliche Anordnung von Sensoren oder ähnlichen Einheiten vorgesehen sein.

Das Stromschienensystem 100 weist als tragende Komponente eine Trägeranordnung 10 auf, die im vorliegenden Fall U-förmig ausgeführt ist und hierbei einen zur Unterseite hin offenen, länglichen Aufnahmeraum 12 bildet, in dem die weiteren Komponenten des Stromschienensystems 100 angeordnet sind. Die Trägeranordnung 10 kann beispielsweise aus mehreren länglichen Blechteilen 15 oder Aluminiumprofilteilen gebildet sein, welche die dargestellte U-Form aufweisen und eine ausreichend stabile Konfiguration aufweisen, um die weiteren Komponenten des Stromschienensystems 100 sowie des letztendlich realisierten Lichtbandes sicher halten zu können. Diese Trägerelemente 15 könnten beispielsweise mittels einer entsprechenden, nicht näher dargestellten Seilaufhängung an der Decke eines zu beleuchtenden Raums befestigt sein.

Die Stromversorgung der an das Stromschienensystem 100 anzuschließenden - im Folgenden nicht näher dargestellten - Beleuchtungseinheiten oder anderen Einheiten erfolgt durch zwei innerhalb des Aufnahmeraums 12 verlaufende Kabel 5a und 5b, die von einem Leitungshalterungs-System 20 gehalten werden. Dieses Leitungshalterungs-System 20 ist in Figur 1 rein schematisch dargestellt. Die Leitungen 5a und 5b befinden sich selbstverständlich nicht frei in dem Innenraum des Leitungshalterungssystems 20 sondern werden durch dieses derart gehalten, dass sie in einer fest vorgegebenen Position stabilisiert sind, allerdings zumindest in gewissen (Längs-)Abschnitten von bestimmten Seiten her derart zugänglich sind, dass sie entsprechend kontaktiert werden können. Die hierfür vorgesehene spezielle erfinderische Ausgestaltung des Leitungshalterungs-Systems 20 soll nachfolgend noch näher beschrieben werden.

Im vorliegenden Fall ist vorgesehen, dass durch das Stromschienensystem 100 eine sogenannte Niedervoltschiene realisiert wird, die das unmittelbare Anschließen von Einheiten erlaubt, welche durch eine Gleichspannung mit niedrigem Potenzial (beispielsweise 14 Volt) versorgt werden. Eine derartige Niedervoltversorgungsspannung ist insbesondere auch bei einer versehentlichen Berührung ungefährlich für Personen, weshalb sich derartige Systeme in der Praxis vielfach bewährt haben und beispielsweise zur Stromversorgung von LED-Beleuchtungseinheiten verwendet werden. Insbesondere sind in diesem Fall keine speziellen Vorsichtsmaßnahmen zu treffen, durch welche ein versehentliches Berühren der Leitungen 5a und 5b verhindert wird.

Auf der anderen Seite erlaubt eine derartige Niedervoltversorgungsspannung dann auch nur das Anschließen entsprechend geeigneter Komponenten, die für eine derartige Versorgungsspannung ausgelegt sind. Darauf hinzuweisen ist deshalb an dieser Stelle, dass das erfindungsgemäße Konzept nicht zwingend auf Stromschienensysteme mit einer Niedervoltversorgungsspannung beschränkt ist sondern die flexible Kontaktierung der Leitungen 5a, 5b auch dann ermöglicht werden kann, wenn diese zur Stromversorgung mit einer klassischen Netzversorgungsspannung in Höhe von 250 Volt verwendet werden.

Darüber hinaus ist auch anzumerken, dass in Figur 1 sowie in der zugehörigen Figur 2a, die schematisch ein Leitungshalterungs-System 20 mit darin angeordneten Leitungen 5a, 5b zeigt, zwar lediglich zwei Leitungen zur Stromversorgung anzuschließender Einheiten dargestellt sind, auch diesbezüglich allerdings keine Einschränkung besteht. Wie die schematische Darstellung von Figur 2b zeigt, könnten nämlich auch mehrere Leitungen innerhalb des Aufnahmeraums 12 angeordnet werden, um beispielsweise verschiedene Stromversorgungskreise zu realisieren, die dann von unterschiedlichen Verbrauchergruppen genutzt werden können. Auch könnten einzelne der Leitungen zu anderen Zwecken, beispielsweise für die Übermittlung von Steuerinformationen oder dergleichen genutzt werden. Insbesondere könnte mit Hilfe zusätzlicher Leitungen auch ein Bussystem zur Signalübertragung derart realisiert werden, dass durch an dem Stromschienensystem 100 angeordnete Sensoren Helligkeits- und/oder Anwesenheitsinformationen erfasst und übermittelt werden, welche dann für eine automatisierte Steuerung der Beleuchtungseinheiten genutzt werden.

Bei bislang bekannten Stromschienensystem ist vorgesehen, dass - wie in Figur 1 dargestellt - die Trägeranordnung 10 den zu einer Seite hin offenen Aufnahmeraum 12 bildet, in dem dann das Leitungshalterungs-System 20 mit den darin eingebetteten Leitungen 5a und 5b angeordnet ist. Die Ausgestaltung des Leitungshalterungs-Systems 20 ist dabei der Art, dass dieses über seine gesamte Länge hinweg mit einem im Wesentlichen gleichbleibenden Querschnitt ausgeführt ist, sodass also die Leitungen 5a, 5b von der offenen Unterseite des Stromschienensystems 100 her kontaktiert werden können. An das Stromschienensystem 100 anzuschließende Verbraucher werden dann also von der Unterseite her an die Trägeranordnung 10 angesetzt und mit dieser gegebenenfalls mechanisch verbunden, wobei zusätzlich entsprechende Kontaktierungselemente in den Aufnahmeraum 12 eingreifen und hier dann die frei zugänglichen Leitungen 5a und 5b kontaktieren.

Obwohl sich dieses System bewährt hat und insbesondere den Vorteil mit sich bringt, dass die Verbraucher in Längsrichtung des Stromschienensystems 100 im Wesentlichen frei an der Trägeranordnung 10 positioniert werden können, besteht ein Nachteil dahingehend, dass die Verbraucher eben doch nur von einer Seite her, also im dargestellten Fall von der Unterseite her an das Stromschienensystem 100 angeschlossen werden können. Ist allerdings gewünscht, dass beispielsweise zusätzliche Einheiten zur Lichtabgabe auch an der Oberseite der Trägeranordnung 10 positioniert werden, um beispielsweise zum Erzielen einer Indirektbeleuchtung Licht nach oben abzugeben, so ist dies bei den bisherigen Lösungen nicht möglich beziehungsweise entsprechende Einheiten müssen deutlich aufwändiger mit den Leitungen 5a und 5b verbunden werden. Gleiches gilt für Einheiten, die beispielsweise seitlich der Trägeranordnung 10 positioniert werden sollen, um zur Seite hin Licht abzugeben oder zur Seite hin ausgerichtete Sensoren zu bilden, die beispielsweise einfallendes Tageslicht und/oder die Anwesenheit beziehungsweise Bewegung von Personen innerhalb des zu beleuchtenden Bereichs erfassen. In derartigen Fällen ist es bislang beispielsweise erforderlich, mit Hilfe separater Kontaktierungseinheiten, die wiederum von der Unterseite her an das Stromschienensystems 100 angesetzt werden, die Leitungen 5a und 5b zu kontaktieren und dann über eine Kabelverbindung einen Anschluss zu seitlich oder oberhalb der Trägeranordnung 10 positionierten Einheiten vorzunehmen.

Die erfindungsgemäße Lösung sieht demgegenüber nunmehr vor, das Leitungshalterungs-System 20 derart auszugestalten, dass zusätzlich zu einer Kontaktierung der Leitungen 5a und 5b von der Unterseite her die Leitungen 5a, 5b auch von der Seite beziehungsweise ggf. auch von der Oberseite her kontaktiert werden können. Genau genommen ist vorgesehen, dass die Leitungen 5a, 5b - wie nachfolgend detailliert beschrieben - abschnittsweise von dem Leitungshalterungs-System 20 derart gehalten werden, dass sie in bestimmten Teilbereichen von der Unterseite her, in weiteren Teilbereichen von der Seite beziehungsweise den Seiten her und ggf. in anderen Teilbereichen wiederum von der Oberseite her kontaktiert werden können. Über bestimmte, in Figur 1 schraffiert dargestellte Abschnitte hinweg wird also immer eine Kontaktierung der Leitungen 5a, 5b in einer bestimmten Weise ermöglicht, sodass zwar in Längsrichtung gesehen die Flexibilität für ein Positionieren der verschiedenen Einheiten etwas eingeschränkt ist, dafür nunmehr allerdings die Einheiten in einfacher Weise auch an anderen Seiten der Trägeranordnung 10 angeordnet werden können.

Bei dem in Figur 1 dargestellten erfindungsgemäßen Stromschienensystem 100 existieren also einerseits Längsbereiche A, in denen die Leitungen 5a, 5b von der Unterseite her zugänglich sind und in denen dementsprechend Einheiten an dem Stromschienensystem 100 in klassischer Weise angeordnet werden können. Andererseits existieren auch Längsbereiche B, in denen die Leitungen 5a, 5b von der Seite her zugänglich sind und dementsprechend Einheiten seitlich an das Stromschienensystem 100 angesetzt werden können. Dabei ist vorteilhafterweise vorgesehen, dass diese Längsbereiche A und B alternierend ausgeführt sind und durch zumindest kurze Stabilisierungsbereiche C voneinander getrennt sind. In diesen Stabilisierungsbereichen C werden die Leitungen 5a, 5b im Wesentlichen allseitig durch das Leitungshalterungs-System 20 umschlossen beziehungsweise abgestützt, sodass hier zwar keine Kontaktierung ermöglicht ist, allerdings die stabile Positionierung der Leitungen 5a, 5b über die gesamte Länge hinweg deutlich verbessert wird.

Wie bei klassischen Stromschienensystemen 100 üblich kann hierbei vorgesehen sein, dass, obwohl die Leitung 5a, 5b nunmehr von der Unterseite her nur in den Bereichen A kontaktiert werden können, die Trägeranordnung 10 trotz allem über die gesamte Länge hinweg nach unten offen ist. Dies bietet sich insofern an, als zum einfachen Anordnen des Leitungshalterungs-Systems 20 in dem Aufnahmeraum 12 dieser ohnehin über eine Seite hinweg vollständig zugänglich sein sollte. Dies ist allerdings nicht zwingend erforderlich. So wäre es auch denkbar, das Leitungshalterungs-System von der Stirnseite her in den Aufnahmeraum 12 bzw. Kanal der Trägeranordnung 10 einzuschieben.

Für die Kontaktierungsmöglichkeiten aus den anderen Richtungen hingegen kann vorgesehen sein, dass die Trägeranordnung 10 in diesen Bereichen B entsprechende Öffnungen oder Fenster aufweist, durch die ein Zugang zum Innenraum 12 ermöglicht wird. Diese Fenster müssen dabei nicht dauerhaft geöffnet sein sondern können beispielsweise in Form herausbrechbarer Laschen oder in vergleichbarer Weise ausgeführt sein, um die Seitenwände 11 der Trägeranordnung 10 gezielt nur in solchen Fällen zu öffnen, in denen tatsächlich die hier zur Verfügung gestellte seitliche Kontaktierungsmöglichkeit genutzt werden soll. Entsprechende Maßnahmen können ferner auch an der Oberseite der Trägeranordnung 10 vorgesehen sein, sofern hier ebenfalls zumindest abschnittsweise ein Kontaktieren der Leitungen 5a, 5b ermöglicht werden soll.

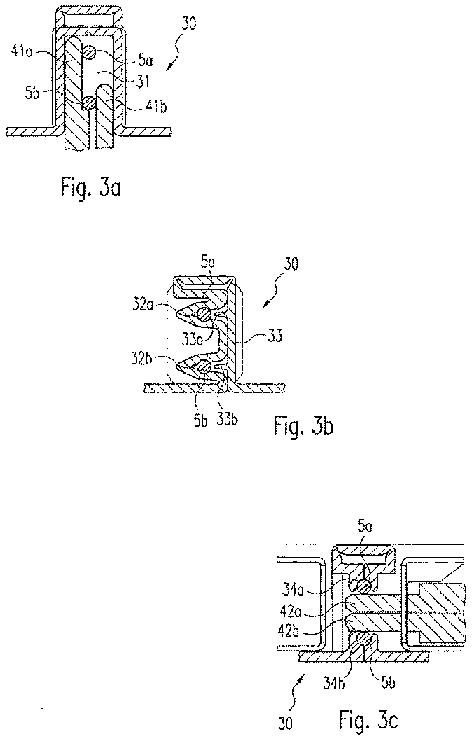

Anhand der Figuren 3a bis 3c sowie der Figuren 4 und 5 soll nunmehr erläutert werden, in welcher Weise die erfindungsgemäße spezielle Kontaktierungsmöglichkeit der Leitungen 5a, 5b realisiert werden kann. Dargestellt sind hierbei drei Querschnitts-Konfigurationen des Leitungshalterungs-Systems 20, die das Kontaktieren der Leitungen 5a, 5b aus unterschiedlichen Richtungen ermöglichen beziehungsweise den oben erwähnten Stabilisierungsbereich C realisieren.

Figur 3a zeigt dabei zunächst diejenige Querschnitts-Konfiguration, die den Kontaktierungsbereich A bildet, in dem also die Leitungen 5a, 5b von der Unterseite her zugänglich sind. Erkennbar ist hierbei, dass das zum Halten der Leitungen 5a, 5b genutzte Profilteil 30, welches aus einem isolierenden Material besteht, derart ausgeführt ist, dass wiederum ein U-förmiger, nun zur Unterseite hin offener Aufnahmeraum 31 geschaffen wird, durch den sich die Leitungen 5a und 5b erstrecken. Wie erkennbar ist, können diese Leitungen dann durch von der Unterseite her eingeführte entsprechende Kontakte 41a, 41b eines nicht näher dargestellten Verbrauchers kontaktiert werden, um dessen Stromversorgung mit der hier vorgesehenen Niedervoltversorgungsspannung sicherzustellen. Der Kontakt 41a ist selbstverständlich in demjenigen Bereich, in dem er an der unteren Leitung 5b anliegt, isolierend ausgeführt, um einen Kurzschluss zu vermeiden.

Erkennbar ist auch, dass bei der in Figur 3a dargestellten Querschnitts-Konfiguration die Leitungen 5a und 5b durch das Profilelement 30 nicht abgestützt werden und sich über diesen ersten Kontaktierungsbereich A hinweg also ohne Abstützung durch den Aufnahmeraum 31 erstrecken. Dementsprechend ist es von Vorteil, wenn an diesen ersten Bereich anschließend ein Stabilisierungsbereich C vorgesehen ist, in dem die Leitungen 5a, 5b stabilisiert werden.

Dies wird durch die in Figur 3b dargestellte Querschnitts-Konfiguration erzielt, die den erwähnten Stabilisierungsbereich C bildet. Hier sind beide Leitungen 5a, 5b zunächst in sich in Längsrichtung erstreckenden, etwa V-artigen Nuten 32a, 32b, die durch das Profilteil 30 gebildet werden, aufgenommen. Das Profilteil 30 ist weiterhin derart ausgeführt, dass an einem zur offenen Seite der Nuten 32a, 32b hin positionierten Wandabschnitt 33 stiftartige Rippen 33a, 33b oder Vorsprünge ausgebildet sind, die in die Nuten 32a, 32b hinein ragen und hier die Leitungen 5a, 5b zusätzlich abstützen. Beide Leitungen 5a, 5b können in diesem Bereich dann zwar aus keiner Richtung kontaktiert werden, werden hierbei allerdings derart allseitig abgestützt beziehungsweise stabilisiert, sodass sie auch in dem den Kontaktierungsbereich A bildenden Bereich stabil innerhalb des Aufnahmeraums 31 verlaufen, so dass die in Figur 3a gezeigte Kontaktierung ermöglicht wird.

Schließlich ist auch eine dritte Querschnitts-Konfiguration vorgesehen, die in Figur 3c gezeigt ist. Diese zeichnet sich dadurch aus, dass die obere Leitung 5a von der Oberseite her, die untere Leitung 5b von der Unterseite her jeweils durch eine etwa halbkreisförmige Längsnut 34a bzw. 34b abgestützt wird. Zu beiden Seiten hin ist nunmehr allerdings keine weitere Abdeckung durch das Profilteil 30 vorgesehen, sodass in diesem Fall also eine Kontaktierung der Leitungen 5a, 5b durch von der Seite herangeführte Kontaktelemente 42a, 42b ermöglicht wird. Dargestellt ist in Figur 3 eine Kontaktierung von der rechten Seite her, wobei selbstverständlich in gleicher Weise auch ein auf der linken Seite angeordnetes Kontaktierungselement genutzt werden könnte, um die Leitungen 5a, 5b zu kontaktieren. Damit bildet diese Querschnitts-Konfiguration dann also den Kontaktierungsbereich B, der das seitliche Anordnen von Verbrauchern oder anderen Einheiten an dem Stromschienensystem 100 ermöglicht.

Selbstverständlich lässt sich das anhand der Figuren 3a bis 3c erläuterte Konzept auch dahingehend weiterbilden, das eine weitere Querschnitts-Konfiguration zu Verfügung gestellt wird, die ein Kontaktieren der Leitungen von der Oberseite her ermöglicht. Die Reihenfolge der zur Verfügung gestellten Kontaktierungsbereiche kann dann in gewünschter Weise gewählt werden, wobei beispielsweise immer ein Kontaktierungsbereich, der ein Kontaktieren der Leitungen von der Unterseite her ermöglicht, alternierend zu einem Kontaktierungsbereich vorgesehen ist, der ein seitliches beziehungsweise ein Kontaktieren von der Oberseite her ermöglicht. Weiterhin ist wie bereits erwähnt vorzugsweise grundsätzlich vorgesehen, dass zwischen zwei Kontaktierungsbereichen immer ein Stabilisierungsbereich vorgesehen ist, in dem die Leitungen 5a, 5b abgestützt werden.

Ferner stellen die dargestellten Querschnitts-Konfiguration lediglich denkbare Ausführungsbeispiele dar, die ggf. auch abgewandelt werden könnten. So wäre es z.B. möglich, bei der in Figur 3b dargestellt Querschnitts-Konfiguration, die ja eigentlich den Bereich zum allseitigen Abstützen der Leitungen 5a, 5b bildet, durch das Einbringen von Öffnungen oder Schlitzen im Bereich der Seitenwand 33 anstelle der Stege 33a, 33b eine Querschnitts-Konfiguration zu realisieren, die ein Kontaktieren der Leitungen 5a, 5b von der rechten Seite her ermöglicht.

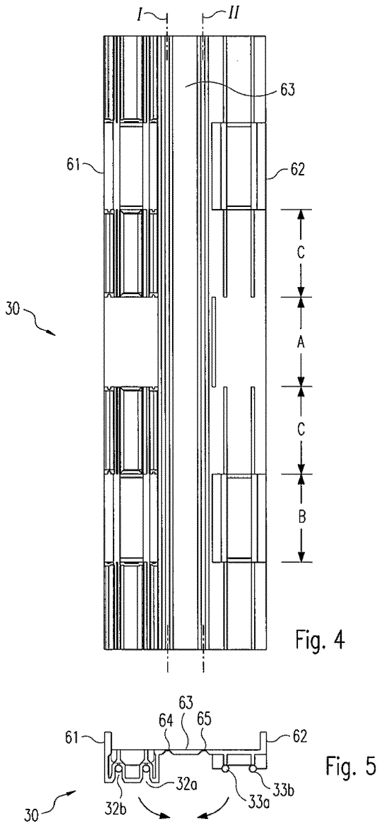

Grundsätzlich könnte vorgesehen sein, dass jeder Kontaktierungsbereich bzw. jeder Stabilisierungsbereich durch ein eigenständiges Profilelement aus einem isolierenden Material, insbesondere Kunststoff gebildet ist und dann entsprechende Elemente in Längsrichtung der Anordnung hintereinander positioniert werden. Vorzugsweise ist allerdings vorgesehen, dass lediglich ein einziger Typ eines Profilteils zum Einsatz kommt, das dann mehrere verschiedene Kontaktierungsbereiche bilden muss. Eine entsprechende Ausgestaltung eines hierfür geeigneten Profilelements 30 ist in den Figuren 4 und 5 dargestellt, wobei es sich hierbei insbesondere um ein im Spritzgussverfahren hergestelltes Kunststoffteil handelt, das nach der Herstellung zunächst die in den Figuren 4 und 5 dargestellte flache Konfiguration aufweist. Das 30 Element zeichnet sich allerdings dadurch aus, dass es zwei parallele zueinander verlaufende Längsbereiche 61, 62, aufweist, die über einen mittleren Verbindungssteg 63 miteinander verbunden sind, wobei zu beiden Seiten des Verbindungsstegs 63 verlaufende Materialschwächungen Filmscharniere 64, 65 bilden, die es ermöglichen, dass das Kunststoffteil 30 um diese Scharniere 64, 65 herum gefaltet werden kann. Insbesondere ist vorgesehen, dass - wie in Figur 5 gezeigt -beide Seitenbereiche 61, 62 entlang der durch die Filmscharniere gebildeten Achsen I und II nach unten gefaltet werden, sodass der Verbindungssteg 63 dann ein oberes, in Längsrichtung verlaufendes Element bildet und von seinen Randbereichen her dann nach unten die bei den gefalteten Seitenbereiche 61, 62 ragen. In Figur 5 ist hierbei der Querschnitt in einem Bereich dargestellt, durch den letztendlich der Überbrückungsbereich C gebildet ist. Dabei sind einerseits die Nuten zur Aufnahme 32a, 32b der Leitungen sowie andererseits die stiftartigen Vorsprünge 33a, 33b erkennbar, die dann von der offenen Seite der Nuten her die darin aufgenommenen Leitungen abstützen.

In der Aufsicht von Figur 4 sind ferner die weiteren, den verschiedenen Querschnitts-Konfigurationen entsprechenden Bereiche gezeigt, wobei sich wiederum die anhand von Figur 1 erkennbare alternierende Anordnung zwischen Kontaktierungsbereich A, Kontaktierungsbereich B und dazwischenliegenden Stabilisierungsbereich C ergibt.

Das dargestellte Profilelement 30 wird wie bereits erwähnt im Spritzgussverfahren hergestellt, da eine entsprechende Ausgestaltung mit unterschiedlichen Querschnitts-Konfigurationen im Rahmen einer Herstellung im Extrusionsverfahren nicht realisierbar wäre. Trotz allem kann in sehr einfacher und eleganter Weise dann ein Leitungshalterungs-System geschaffen werden, welches die erfindungsgemäße flexible Kontaktierung der Leitungen ermöglicht. Nach Herstellen der Profilteile müssen lediglich noch die Leitungen in die Profilteile eingelegt werden. Anschließend werden die Profilteile wie oben beschrieben entsprechend gefaltet und können dann in die Trägerelemente des Systems eingelegt werden.

Letztendlich kann also mit einem verhältnismäßig geringen Aufwand die Möglichkeit zur Kontaktierung von allen Leitungen in einem Stromschienensystem deutlich verbessert werden. Die sich hieraus ergebenden flexibleren Kontaktierungsmöglichkeiten gestatten es, Stromschienensysteme noch vielfältiger und zu unterschiedlichen Zwecken einzusetzen.

## Patentansprüche

1. Stromschienensystem (100) mit einer länglichen Trägeranordnung (10) sowie einem sich entlang der Trägeranordnung (10) erstreckenden Leitungshalterungs-System (20), welches Leitungen (5a, 5b) für eine Stromversorgung und/oder Signalübertragung derart hält, dass die Leitungen (5a, 5b) durch an das Stromschienensystem (100) anzuschließende Einheiten kontaktierbar sind,
**dadurch gekennzeichnet,**
**dass** die Leitungen (5a, 5b) als Kabel ausgebildet sind und
**dass** das Leitungshalterungs-System (20) zumindest zwei unterschiedliche Querschnitts-Konfigurationen (A, B) aufweist, welche jeweils das Kontaktieren der Leitungen (5a, 5b) aus unterschiedlichen Richtungen ermöglichen,
wobei zwei aufeinanderfolgende unterschiedliche Querschnitts-Konfigurationen (A, B) durch einen Stabilisierungsbereich (C) miteinander verbunden werden, dessen Querschnitt derart ist, dass die Leitungen (5a, 5b) im Wesentlichen über ihren gesamten Umfang abgestützt sind.

2. Stromschienensystem nach Anspruch 1,
**dadurch gekennzeichnet,**
**dass** die unterschiedlichen Querschnitts-Konfiguration (A, B) alternierend entlang des Leitungshalterungs-Systems (20) ausgebildet sind.

3. Stromschienensystem nach einem der vorherigen Ansprüche,
**dadurch gekennzeichnet,**
**dass** das Leitungshalterungs-System (20) durch in Längsrichtung hintereinander angeordnet längliche Profilteile (30) gebildet ist.

4. Stromschienensystem nach Anspruch 3,
**dadurch gekennzeichnet,**
**dass** die Profilteile (30) identisch ausgeführt sind.

5. Stromschienensystem nach Anspruch 4,
**dadurch gekennzeichnet,**
**dass** die Profilteile (30) durch vorzugsweise im Spritzgussverfahren hergestellte Kunststoffteile gebildet sind.

6. Stromschienensystem nach Anspruch 4 oder 5,
**dadurch gekennzeichnet,**
**dass** die Profilteile (30) in einem Ausgangszustand um ein oder mehrere in Längsrichtung verlaufende Achsen (I, II) faltbar sind.

7. Stromschienensystem nach einem der vorherigen Ansprüche,
**dadurch gekennzeichnet,**
**dass** die Trägeranordnung (10) einen sich in Längsrichtung erstreckenden Aufnahmeraum (12) bildet, in dem das Leitungshalterungs-System (20) angeordnet ist.

8. Stromschienensystem nach einem Anspruch 7,
**dadurch gekennzeichnet,**
**dass** der Aufnahmeraum (12) über die gesamte Länge hinweg zu einer Seite hin offen ist, wobei eine der Querschnitts-Konfigurationen (A, B) des Leitungshalterungs-Systems (20) ein Kontaktieren der Leitungen (5a, 5b) von der offenen Seite her ermöglicht.

9. Stromschienensystem nach Anspruch 7 oder 8,
**dadurch gekennzeichnet,**
**dass** die Trägeranordnung (10) den durch die Querschnitts-Konfigurationen (A, B) gebildeten Kontaktierungsbereichen entsprechende Öffnungen aufweist bzw. entsprechend geöffnet werden kann.

10. Stromschienensystem nach Anspruch 9,
**dadurch gekennzeichnet,**
**dass** Seitenwände (11) der Trägeranordnung (10) herausbrechbare Laschen aufweisen.

11. Lichtbandsystem mit einem Stromschienensystem (100) nach einem der vorherigen Ansprüche sowie an dem Stromschienensystem (100) anzuschließenden Einheiten.

12. Lichtbandsystem nach Anspruch 11,
**dadurch gekennzeichnet,**
**dass** es sich bei den anzuschließenden Einheiten um Beleuchtungseinheiten handelt.

13. Lichtbandsystem nach Anspruch 11 oder 12,
**dadurch gekennzeichnet,**
**dass** die anzuschließenden Einheiten Sensoren umfassen.

14. Lichtbandsystem nach einem der Ansprüche 11 bis 13,
**dadurch gekennzeichnet,**
**dass** durch die Leitungen eine Niedervoltversorgungsspannung zur Verfügung gestellt wird.

## Claims

1. A busbar system (100) with an elongated carrier assembly (10) and a line holding system (20) extending along the carrier assembly (10), which holds lines (5a, 5b) for a current supply and/or signal transmission in such a manner that the lines (5a, 5b) can be contacted by units to be connected to the busbar system (100),
**characterized in**
**that** the lines (5a, 5b) are designed as cables and
**that** the line holding system (20) has at least two different cross-sectional configurations (A, B), which in each case make possible the contacting of the lines (5a, 5b) from different directions,
wherein two successive different cross-sectional configurations (A, B) are connected to one another by a stabilization region (C), the cross section of which is such that the lines (5a, 5b) are supported substantially over its entire circumference.

2. The busbar system according to Claim 1,
**characterized in**
**that** the different cross-sectional configurations (A, B) are formed alternately along the line holding system (20).

3. The busbar system according to any one of the preceding claims,
**characterized in**
**that** the line holding system (20) is formed by elongated profile parts (30) arranged one after the other in the longitudinal direction.

4. The busbar system according to Claim 3,
**characterized in**
**that** the profile parts (30) are of identical construction.

5. The busbar system according to Claim 4,
**characterized in**
**that** the profile parts (30) are formed by plastic parts produced preferably in an injection molding process.

6. The busbar system according to Claim 4 or 5,
**characterized in**
**that** the profile parts (30) can be folded in an initial state about one or more axes (I, II) extending in the longitudinal direction.

7. The busbar system according to any one of the preceding claims,
**characterized in**
**that** the carrier assembly (10) forms a receiving space (12) extending in the longitudinal direction, in which the line holding system (20) is arranged.

8. The busbar system according to Claim 7,
**characterized in**
**that** the receiving space (12) is open towards one side over the entire length, wherein one of the cross-sectional configurations (A, B) of the line holding system (20) makes possible a contacting of the lines (5a, 5b) from the open side.

9. The busbar system according to Claim 7 or 8,
**characterized in**
**that** the carrier assembly (10) has openings corresponding to the contacting regions formed by the cross-sectional configurations (A, B) or can be correspondingly opened.

10. The busbar system according to Claim 9,
**characterized in**
**that** the side walls (11) of the carrier assembly (10) have tabs which can be broken out.

11. A lighting strip system with a busbar system (100) according to any one of the preceding claims and units to be connected to the busbar system (100).

12. The lighting strip system according to Claim 11,
**characterized in**
**that** the units to be connected are lighting units.

13. The lighting strip system according to Claim 11 or 12,
**characterized in**
**that** the units to be connected comprise sensors.

14. The lighting strip system according to any one of Claims 11 to 13,
**characterized in**
**that** a low voltage supply voltage is made available through the lines.

## Revendications

1. Système de rail conducteur (100) avec un ensemble de support (10) allongé ainsi qu'avec un système de retenue de lignes (20) qui s'étend le long de l'ensemble de support (10) et qui retient des lignes (5a, 5b) d'alimentation électrique et/ou de transmission de signaux de telle sorte que les lignes (5a, 5b) peuvent être contactées par des unités devant être connectées au système de rail conducteur (100),
**caractérisé en ce que**
les lignes (5a, 5b) sont constituées en tant que câbles et
**en ce que** le système de retenue de lignes (20) comporte au moins deux configurations de section transversale (A, B) différentes qui permettent respectivement la mise en contact des lignes (5a, 5b) à partir de différentes directions,
deux configurations de section transversale (A, B) différentes qui se suivent étant raccordées l'une à l'autre par une zone de stabilisation (C) dont la section transversale est telle que les lignes (5a, 5b) sont supportées essentiellement sur la totalité de leur circonférence.

2. Système de rail conducteur selon la revendication 1,
**caractérisé en ce que**
les différentes configurations de section transversale (A, B) sont constituées de façon alternée le long du système de retenue de lignes (20).

3. Système de rail conducteur selon l'une des revendications précédentes,
**caractérisé en ce que**
le système de retenue de lignes (20) est formé par des pièces profilées (30) allongées disposées les unes derrière les autres dans la direction longitudinale.

4. Système de rail conducteur selon la revendication 3,
**caractérisé en ce que**
les pièces profilées (30) sont réalisées de façon identique.

5. Système de rail conducteur selon la revendication 4,
**caractérisé en ce que**
les pièces profilées (30) sont formées de pièces en matière plastique fabriquées de préférence par le procédé de moulage par injection.

6. Système de rail conducteur selon la revendication 4 ou 5,
**caractérisé en ce que,**
dans un état initial, les pièces profilées (30) peuvent être pliées autour d'un ou de plusieurs axes (I, II) placés dans la direction longitudinale.

7. Système de rail conducteur selon l'une des revendications précédentes,
**caractérisé en ce que**
l'ensemble de support (10) forme un espace de réception (12) qui s'étend dans la direction longitudinale et dans lequel est disposé le système de retenue de lignes (20).

8. Système de rail conducteur selon une revendication 7,
**caractérisé en ce que**
l'espace de réception (12) est ouvert sur toute la longueur vers un côté, une des configurations de section transversale (A, B) du système de retenue de lignes (20) permettant une mise en contact des lignes (5a, 5b) à partir du côté ouvert.

9. Système de rail conducteur selon la revendication 7 ou 8,
**caractérisé en ce que**
l'ensemble de support (10) comporte des ouvertures correspondant aux zones de mise en contact formées par les configurations de section transversale (A, B), ou respectivement peut être ouvert en conséquence.

10. Système de rail conducteur selon la revendication 9,
**caractérisé en ce que**
des parois latérales (11) de l'ensemble de support (10) comportent des attaches pouvant être brisées.

11. Système de bande de lumière avec un système de rail conducteur (100) selon l'une des revendications précédentes ainsi qu'avec des unités devant être connectées sur le système de rail conducteur (100).

12. Système de bande de lumière selon la revendication 11,
**caractérisé en ce que,**
concernant les unités devant être connectées, il s'agit d'unités d'éclairage.

13. Système de bande de lumière selon la revendication 11 ou 12,
**caractérisé en ce que**
les unités devant être connectées comprennent des capteurs.

14. Système de bande de lumière selon l'une des revendications 11 à 13,
**caractérisé en ce**
**qu'**une tension d'alimentation bas voltage est mise à disposition par les lignes.
